# EUROPEAN PATENT APPLICATION

(11) **EP 2 919 200 A1**
(43) Date of publication of application: **16.09.2015**
(21) Application number: 13853903.6
(22) Date of filing: 18.06.2013
(51) Int. Cl.: G07C 5/00, G08G 1/00, B60R 21/00, B62D 41/00

(54) **VEHICLE STATE STORAGE DEVICE**

(30) Priority: 09.11.2012 JP 2012247089
(71) Applicant: TOYOTA JIDOSHA KABUSHIKI KAISHA, Toyota-shi, Aichi-ken, 471-8571 (JP)
(72) Inventor: NIWA Kenji, Toyota-shi Aichi 471-8571 (JP); TAKAMURA Shinichi, Toyota-shi Aichi 471-8571 (JP); KONDO Masami, Toyota-shi Aichi 471-8571 (JP)
(74) Representative: Kuhnen & Wacker
(86) International application number: PCT/JP2013/066680
(87) International publication number: WO 2014/073235

(57) **Abstract**

Disclosed is an EDR (100) for storing predetermined information. The EDR (100) is mounted to a vehicle (e.g., automobile (1)) and includes a control unit (101) that determines an event and controls a storage unit (103) to store predetermined information therein. If the driver either depresses an accelerator pedal within a predetermined period after manipulating a shift lever or simultaneously manipulates the shift lever and depresses the accelerator pedal, the storage unit (103) is controlled to store therein at least operating information on the operation of the shift lever and the accelerator pedal and traveling state information on the vehicle's traveling state. This configuration limits unnecessary increases in size of stored data even if information is stored on events that are not directly related to accidents.

## Description

### Technical Field

The present invention relates in general to vehicle state storage devices mounted to vehicles to store information on, for example, their traveling state and in particular to vehicle state storage devices that store information on predetermined, non-accident events, as well as information on accidents.

### Background Art

Event data recorders (vehicle state storage devices) have been conventionally mounted to automobiles and other vehicles, primarily to investigate the cause of an accident. An event data recorder generally senses an impact generated in an accident and records information on the vehicle's traveling state and the driver's operation that occur within a predetermined time both before and after the time of the accident.

As an example, Patent Document 1 describes a vehicle activity information collecting device that, when there occurs an operation, for example due to a driver's operational mistake or habit, that may not cause an accident but is still dangerous, additionally stores information on the vehicle's specific activities (traveling state) caused by the dangerous operation. The stored data is used to find undesirable habits that are unique to the driver and notify the driver of his habits in order to promote safe driving.

### Citation List

### Patent Literature

Patent Document 1: JP 2001-026287A

### Summary of the Invention

### Problems to Be Solved by the Invention

Meanwhile, if information is additionally stored on events that are not directly related to accidents in the same manner as in the conventional example, the size of stored data increases drastically, and the required storage capacity increases to an unrealistic level. That in turn will add to cost and the time needed to analyze the data.

Sampling cycles may be simply lengthened to reduce the size of data. That, however, makes it difficult to collect useful data, for example, when the vehicle's traveling state changes abruptly due to an impact in an accident. In other words, the quality of stored data degrades.

The present invention, conceived to address these practical problems, has an object to limit unnecessary increases in size of stored data without causing quality degradation by, when information is to be additionally stored on events that are not directly related to accidents, restricting types of events for which data should be stored.

### Solution to Problem

The present invention, intended to achieve the object, focuses on the fact that the vehicle may move in an unintended direction due to the driver's misunderstanding or mistake in a shifting operation when the vehicle accelerates from standstill or from parking or when the vehicle stops momentarily and reaccelerates before coming to a complete stop or parking.

In other words, the present invention relates to a vehicle state storage device mounted to a vehicle to store information on a predetermined vehicle state. The present invention is technically characterized in that the vehicle state storage device includes a control unit that, either if a driver of the vehicle has performed an accelerator depressing operation within a predetermined period after the driver performing a shifting operation or if the driver has simultaneously performed a shifting operation and an accelerator depressing operation, controls a storage unit to store therein at least operating information on the shifting operation and the accelerator depressing operation and traveling state information on a traveling state of the vehicle.

For example, in accelerating the vehicle from standstill, if the driver depresses the accelerator pedal immediately after operating the shift lever or simultaneously depresses the accelerator pedal and operates the shift lever, the driver is likely in such a hurry that he/she is misunderstanding the situation or making an operational mistake. The vehicle state storage device, configured as above, is capable of storing, for example, information on operations that result from a misunderstanding or mistake by the driver and information on the vehicle's traveling state that results from those operations in the storage unit.

More specifically, an automobile is generally provided with an automatic transmission that operates at least in forward mode and reverse mode. When this is actually the case, the shifting operation is a switching operation to either the forward mode or the reverse mode, and the control unit controls the storage unit to store therein at least traveling state information representative of whether the vehicle is traveling forward or backward.

This configuration enables the storage unit to, when the vehicle has moved in a direction opposite to the driver's intended direction due to the driver's misunderstanding or mistake in the shifting operation, store therein information (operating information) on the operational mistake. The configuration further enables the storage unit to store therein information on traveling state including the brake being suddenly operated or the vehicle coming into physical contact with something immediately after the vehicle has started to move. The storage unit is also enabled to store therein operating information that the driver has performed another shifting operation. From these viewpoints, the control unit preferably controls the storage unit to also store therein operating information on braking operations by the driver to understand the situation more accurately.

The control unit may control the storage unit to store therein the operating information and the traveling state information only when the vehicle is practically stationary (i.e., the vehicle speed is approximately zero) or less than or equal to a predetermined, very low value. This configuration limits recording-worthy events more appropriately by positively excluding those cases where the driver is deliberately performing quick operations, for example, in sport driving.

The predetermined period within which to detect the accelerator depressing operation that follows the shifting operation may be varied depending on vehicle speed. The criteria used in determining that the accelerator depressing operation has been performed may be changed with vehicle speed. For example, for higher vehicle speed, the predetermined period may be reduced or the criteria used in determining the accelerator depressing operation may be increased on an assumption that the driver would more likely deliberately perform quick operations.

A recording-worthy events may be determined in the following manner as a specific example. The control unit may determine that the driver has performed the accelerator depressing operation within a predetermined period after the driver performing the shifting operation if the driver is depressing an accelerator operation amount less than a first specified value at a time when the shifting operation is started, and the accelerator operation amount has increased up to, or greater than, a second specified value within a specified time from a time when the shifting operation is completed, the second specified value being greater than the first specified value.

Alternatively, the control unit may determine that the driver has performed the accelerator depressing operation within a predetermined period after the driver performing the shifting operation if the increment (in absolute value) of the accelerator operation amount, monitored over a predetermined time both before and after the time when the shifting operation is started (or the time when the shifting operation is completed), is greater than a criterion predetermined for the determination. Meanwhile, the control unit may determine that the driver has simultaneously performed the shifting operation and the accelerator depressing operation if the driver has continuously depressed an accelerator operation amount greater than or equal to a predetermined value from a time when the shifting operation is started to a time when the shifting operation is completed.

Data may be stored in the following manner as a specific example. The vehicle state storage device may further include a temporary storage unit that serially stores, and updates at predetermined intervals, the operating information and the traveling state information, wherein: the storage unit may include a non-volatile storage device; and the control unit, upon determining that either the driver has performed the accelerator depressing operation within a predetermined period after the driver performing the shifting operation or the driver has simultaneously performed the shifting operation and the accelerator depressing operation, may read out part of the operating information and the traveling state information that is generated within a predetermined time both before and after the determination from the temporary storage unit and control the storage unit to store therein that part of the operating information and the traveling state information.

### Advantageous Effects of the Invention

As described above, the vehicle state storage device in accordance with the present invention is capable of storing information on the driver's operations and the vehicle's traveling state, for example, when there occurs an event, such as the vehicle moving in an unintended direction in an acceleration from standstill, that may not cause an accident but is still dangerous. By analyzing the data recorded in this manner, it becomes possible to identify situations where the driver will likely have a misunderstanding or make a mistake in shifting operations and to pin down the causes of the misunderstandings and mistakes. In other words, the vehicle state storage device in accordance with the present invention is capable of limiting unnecessary increases in size of stored data without causing quality degradation by limiting events to be recorded in a suitable manner.

### Brief Description of Drawings

Figure 1 is a schematic diagram representing an exemplary vehicle control system to which the present invention is applicable.
Figure 2 is an illustration of a shift lever and an exemplary function of a shift position sensor.
Figure 3 is a functional block diagram for a control unit of an EDR.
Figure 4 is an illustration showing generation of a data set for storage.
Figure 5 is a flow chart depicting exemplary control from determination of an event to recording of the event.

### Description of Embodiments

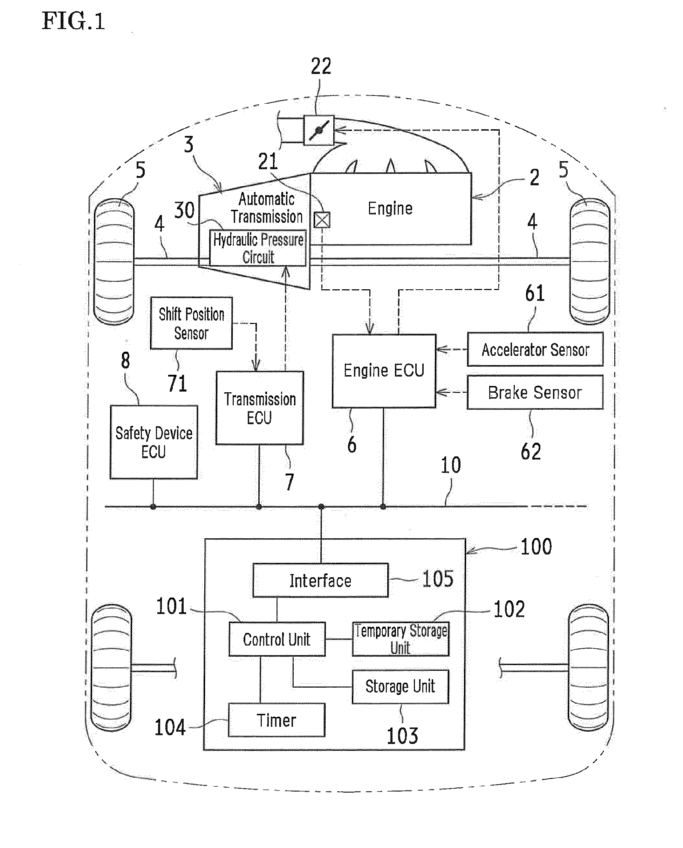

The following will describe embodiments of the present invention in reference to drawings. The present embodiment will discuss, as an example, an event data recorder (hereinafter, abbreviated as "EDR") 100 which is a vehicle information storage device mounted to an automobile (vehicle) 1 as shown in the schematic in Figure 1.

The automobile 1 in accordance with the present embodiment includes a power unit disposed horizontally in an engine compartment that is located near the front part of the vehicle body. The power unit is composed of a multicylinder gasoline engine 2 and an automatic transmission 3. The automatic transmission 3 is built around, for example, a CVT (continuously variable transmission; not shown) and further provided with a torque converter, a forward/reverse travel switching mechanism, and a differential gear mechanism. The output rotation of the differential gear mechanism is transmitted to wheels 5 via drive shafts 4.

The engine 2 is provided with an engine rotational speed sensor 21 and a throttle valve 22. The engine rotational speed sensor 21 detects the rotational speed of a crankshaft. The throttle valve 22 is opened/closed in response to, for example, an accelerator depressing operation by the driver, to regulate intake air quantity. Signals, for example from an accelerator sensor 61 and the engine rotational speed sensor 21, are fed to an engine ECU 6. The accelerator sensor 61 detects an amount by which the accelerator pedal (not shown) is depressed (accelerator opening degree). The engine ECU 6 controls the opening degree of the throttle valve 22 according to these incoming signals.

The engine ECU 6 also receives signals from a brake sensor 62 and various other sensors (not shown), executes predetermined computation, and outputs control signals to a fuel injection device and an ignition device in the engine 2 to further control an air-fuel ratio and ignition timings. The brake sensor 62 detects an operation of a brake pedal (not shown).

The automatic transmission 3 includes a hydraulic pressure control circuit 30 that controls the gear ratio and belt clamping pressure of the CVT. Signals, for example from a shift position sensor 71, are fed to a transmission ECU 7. According to these incoming signals, the transmission ECU 7 actuates, for example, an electromagnetic solenoid valve of the hydraulic pressure control circuit 30. Similarly, the hydraulic pressure control circuit 30, receiving control signals from the transmission ECU 7, actuates a forward/reverse travel switching device to switch the automatic transmission 3 between forward mode and reverse mode.

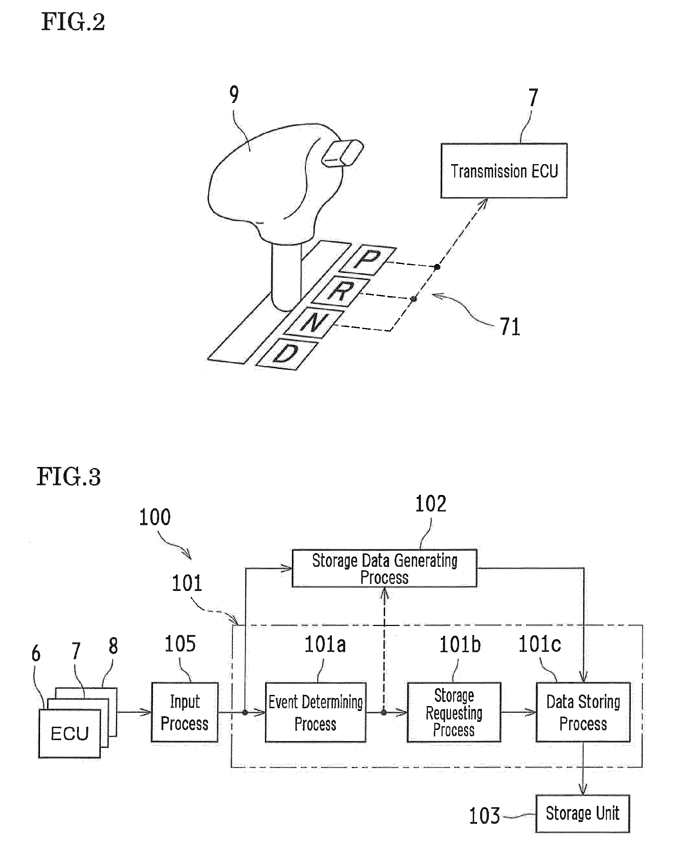

The shift position sensor 71 detects the position of a shift lever 9 as in the example shown in Figure 2. The shift lever 9 can be shifted to a parking position "P" for parking, a reverse position "R" for reverse travel, a neutral position "N" for interrupting power transmission, and a drive position "D" for forward travel. In the present embodiment, when the shift lever 9 is in the parking position "P", the reverse position "R", or the neutral position "N", the shift position sensor 71 outputs an ON signal that corresponds to that particular position of the shift lever 9.

As illustrated in Figure 1, the engine ECU 6 and the transmission ECU 7 are mutually connected over a CAN (car area network) 10 to enable communications between them. Control ECUs other than the engine ECU 6 and the transmission ECU 7 are connected to the CAN 10. For example, a safety device ECU 8 is connected as shown in the figure to control actuation of an air bag and a seat belt pretensioner.

Figure 1 shows the accelerator sensor 61 and the brake sensor 62 being connected to the engine ECU 6 and the shift position sensor 71 being connected to the transmission ECU 7. Alternatively, these sensors may also be connected to the ECUs 6 to 8 over the CAN 10. Various other sensors may also be connected to the ECUs 6 to 8 either directly or over the CAN 10.

Examples of various other sensors include: an air flow meter, a boost sensor, a throttle opening degree sensor, a water temperature sensor, and a hydraulic pressure sensor for the engine 2; various rotational speed sensors and a hydraulic pressure sensor for the automatic transmission 3; a vehicle acceleration sensor; a steering angle sensor; and a hydraulic pressure sensor and tire air pressure sensors for an ABS.

The ECUs 6 to 8 are all publicly known ECUs that include, for example, a CPU, a ROM, a RAM, and a backup RAM (none shown). The CPU executes computation based on various control programs and control maps stored in the ROM. The RAM is a memory that temporarily stores, for example, results of computations executed by the CPU and data fed from each sensor. The backup RAM stores, for example, data that should be stored while the engine 2 is stopped.

### Schematic Structure of Information Storage Device

In the control system for the automobile 1 detailed above, the event data recorder 100 (hereinafter, abbreviated as "EDR 100") is connected to the CAN 10 to enable communications between the EDR 100 and the ECUs 6 to 8. The EDR 100 stores predetermined one or more of, for example, signal values that are fed from the various sensors (information on a predetermined vehicle state(s)).

The EDR 100 in accordance with the present embodiment includes: a control unit 101, similarly to the ECUs 6 to 8, provided with, for example, a CPU, a ROM, and a RAM; a temporary storage unit 102 composed primarily of a RAM; a storage unit 103 composed of a non-volatile storage device; and a timer 104. The control unit 101 controls each unit according to control programs stored in the ROM.

The control unit 101 is connected to the CAN 10 via an interface 105 and accesses the RAMs in the ECUs 6 to 8 over the CAN 10 to obtain predetermined part of data, such as signal values fed from the various sensors and vehicle state-related amounts calculated from the signal values. In other words, the ROM in the control unit 101 stores in advance address information for the data written to the RAMs in the ECUs 6 to 8 so that the control unit 101 can read out required data from the RAMs in the ECUs 6 to 8 by relying on this address information.

The control unit 101 writes the readout data to the temporary storage unit 102 serially and updates the written data at predetermined intervals. If the automobile 1 experiences, for example, an impact in an accident, the control unit 101 reads out data from the temporary storage unit 102 to write it to the storage unit 103. As in the example shown in a functional block diagram in Figure 3, the control unit 101 includes an event determining unit 101a, a storage requesting unit 101b, and a data storing unit 101c. The event determining unit 101a determines, from the data fed through the interface 105, whether or not there has occurred an event that should be recorded. The storage requesting unit 101b outputs a storage requesting signal in accordance with the result of the determination. The data storing unit 101c operates in accordance with the storage requesting signal.

The data storing unit 101c, upon receiving the storage requesting signal, generates a data set to be stored from the data stored serially in the temporary storage unit 102 in the manner detailed below and writes (stores) this data set to the storage unit 103. The information that should be stored, for example in an accident, is information that is related to predetermined operations performed by the driver and the predetermined traveling state of the automobile 1. Examples of such information include accelerator depressing operations and braking operations performed immediately before an accident, the vehicle speed of the automobile 1, acceleration due to an impact in an accident, and an activation of an air bag.

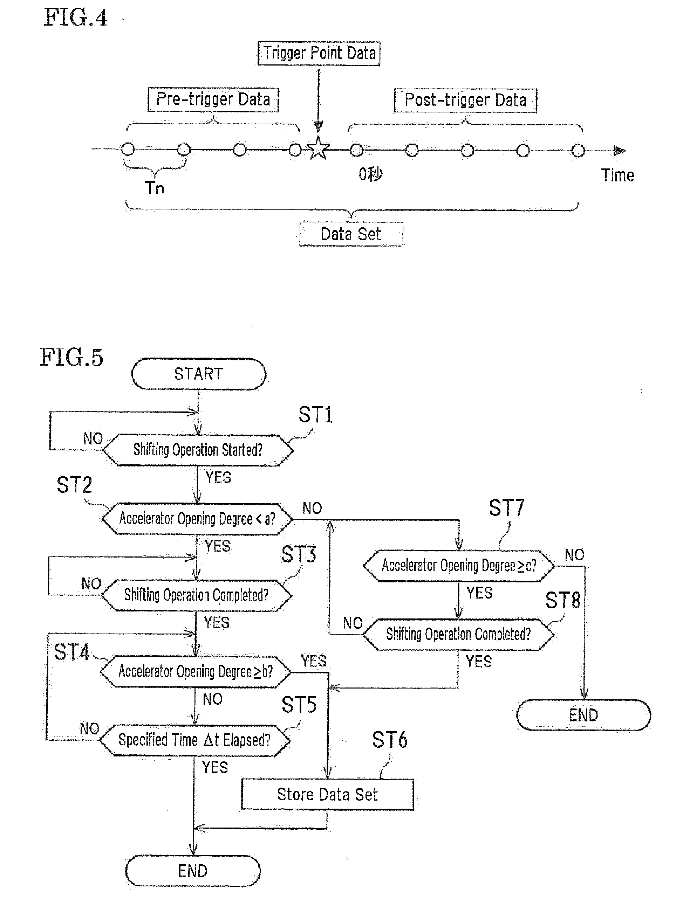

More specifically, as described above and schematically shown in Figure 4, in the temporary storage unit 102, the data read out from the ECUs 6 to 8 by the control unit 101 in the EDR 100 (indicated by white circles in the figure) is serially written, and the written data is updated at predetermined intervals, while the power supply for the automobile 1 is ON. In other words, when the size of the temporarily stored data exceeds a predetermined storage capacity in a manner that corresponds to a sampling cycle Tn, the temporarily stored data is overwritten sequentially by new data starting with the oldest data.

After that, as indicated by a broken line in Figure 3 and a white star in Figure 4, as a trigger is generated in accordance with the event determination, the data at that point in time, that is, the data at the time of the event determination (trigger point data), the data within a predetermined time before the trigger point (pre-trigger data), and the data within a predetermined time after the trigger point (post-trigger data) are read out of the temporarily stored data as a data set to be stored.

The data set thus generated from the temporarily stored data is stored in the storage unit 103 composed of a non-volatile storage device. This configuration enables the data that should be stored to be stored for analysis of the accident even when the automobile 1 is destructed, for example, in an accident. For these purposes, the storage unit 103 is preferably composed of, for example, an EPROM, a F-ROM (flash ROM), or another non-volatile memory and may be composed of a HDD (hard disk drive).

The storage unit 103 may store therein various other information, such as vehicle ID, model ID, date of manufacture, and factory of manufacture of the automobile 1. The vehicle ID may be information by which individual vehicles are identifiable and may be, for example, a vehicle ID number or an ID assigned to the EDR 100. The model ID may be the name, chassis type, engine type, transmission type, suspension type, etc. of the automobile 1.

The event data recorder 100 in accordance with the present embodiment is provided with a port (not shown) for connection to a dedicated terminal device available, for example, to car dealers. By connecting a dedicated terminal device to the connection port, the data stored in the storage unit 103 in the event data recorder 100 becomes transferrable to the dedicated terminal device.

### Recording of Mistakes in Shifting Operation

As described earlier, in the present embodiment, the EDR 100 not only determines, for example, an accident involving the automobile 1 as an event that should be recorded, but also determines, for example, the driver's predetermined operational mistake that may not cause an accident but is still dangerous as one of such events. The EDR 100 then writes (stores) information on the operational mistake and the traveling state of the automobile 1 that results from the operational mistake to the storage unit 103.

Specifically, the control unit 101 in the EDR 100 obtains data on shifting operations and accelerator depressing operations by the driver over the CAN 10. Either if the driver has performed an accelerator depressing operation within a predetermined time after the driver shifted the shift lever 9 to the drive position "D" or to the reverse position "R" or if the driver has simultaneously performed a shifting operation and an accelerator depressing operation, the control unit 101 stores predetermined information on operations by the driver (operating information) and predetermined information on the traveling state of the automobile 1 (traveling state information).

The following will describe in detail a control routine, from determination of an event to recording of the event, that is executed by the control unit 101 in reference to the example depicted in a flow chart in Figure 5. This control routine is executed by the control unit 101 repeatedly at predetermined time intervals (50 ms).

As the control routine is started (START), the control unit 101 in step ST1 determines, based on signals from the shift position sensor 71, whether or not the driver of the automobile 1 has shifted the shift lever 9 to one of the drive position "D" and the reverse position "R", especially, whether or not the driver has started one of these shifting operations.

In the present embodiment, the shift position sensor 71 outputs ON signals that correspond respectively to the parking position "P", the reverse position "R", and the neutral position "N" (hereinafter, a "P signal", an "R signal", and an "N signal"). When these P, R, and N signals all go OFF, it indicates that the shift lever 9 has been shifted to the drive position "D". When out of the P, R, and N signals, only the R signal goes ON, it indicates that the shift lever 9 has been shifted to the reverse position "R".

Hence, unless the P, R, and N signals all go OFF or only the R signal goes ON, step ST1 produces a negative result ("No"), and the control unit 101 stands by. On the other hand, if one of these conditions is established, step ST1 produces a positive result ("Yes"), and the process proceeds to step ST2 where the control unit 101 determines, based this time on signals from the accelerator sensor 61, whether or not the accelerator opening degree is less than a first specified value "a". This first specified value "a" may be set to, for example, about 5 to 10%, which is representative of a state where the accelerator pedal is not much depressed.

If the accelerator opening degree is greater than or equal to the first specified value "a", step ST2 produces a negative result ("No"), and the process proceeds to step ST7 (which will be described later in detail). On the other hand, if the accelerator opening degree is less than the first specified value "a", step ST2 produces a positive result ("Yes"), and the process proceeds to step ST3 where the control unit 101 determines, based on signals from the shift position sensor 71, whether or not the aforementioned shifting operation to either the drive position "D" or the reverse position "R" is completed.

Specifically, as an example, during the shifting of the shift lever 9 from the neutral position "N" past the reverse position "R" to the parking position "P", there is a short moment when only the R signal goes ON. There is also a short moment when the P, R, and N signals all go OFF, between the neutral position "N" and the reverse position "R" and between the reverse position "R" and the parking position "P".

Accordingly, the control unit 101 determines that the shifting operation is completed if the shift lever 9 is maintained at the drive position "D" or the reverse position "R" for a certain period of time after it is determined in step ST1 that the shifting operation is started. More specifically, as described earlier, if a predetermined time (e.g., 0.5 seconds) elapses with the P, R, and N signals being all OFF, it indicates that the shifting operation to the drive position "D" is completed. If the predetermined time elapses with only the R signal being ON, it indicates that the shifting operation to the reverse position "R" is completed.

Until the shifting operation is completed in this manner, step ST3 produces a negative result ("No"), and the control unit 101 stands by. If the shifting operation is completed, step ST3 produces a positive result ("Yes"), and the process proceeds to step ST4 where the control unit 101 again evaluates the accelerator opening degree. Specifically, the control unit 101 determines, based on signals from the accelerator sensor 61, whether or not the accelerator opening degree is greater than or equal to a second specified value "b" (b > a). This second specified value "b" may be set to, for example, about 25 to 40%, which is representative of a state where the accelerator pedal is depressed to or beyond a certain level above the first specified value "a".

If the accelerator opening degree is less than the second specified value "b", step ST4 produces a negative result ("No"), and the process proceeds to step ST5 where the control unit 101 determines whether or not a specified time Δt has elapsed since it is determined in step ST3 that the shifting operation is completed. If this determination in step ST5 produces a negative result ("No"), the process returns to step ST4 where the control unit 101 determines whether or not the accelerator opening degree has increased to or above the second specified value "b". In other words, steps ST4 and ST5 determine whether or not the accelerator opening degree has increased to or above the second specified value "b" within the specified time Δt after completion of the shifting operation.

The specified time Δt is intended for use in detecting the driver depressing the accelerator pedal too soon after he/she shifts the shift lever 9 to the drive position "D" or the reverse position "R". In other words, the specified time Δt is intended for use in detecting the driver performing dangerously quick operations. The specified time Δt may be set to, for example, 0.5 to 1 second.

If the driver performs an accelerator depressing operation within that specified time Δt, and the accelerator opening degree is greater than or equal to the second specified value "b", step ST4 produces a positive result ("Yes"), and the process proceeds to step ST6 where the control unit 101 controls the storage unit 103 to store therein a data set. Specifically, as described earlier, the storage unit 103 stores therein a data set generated from data read out from the temporary storage unit 102. This data set includes at least the shift position and the accelerator opening degree, preferably additionally includes information on braking operations, and more preferably further includes information on whether the automobile 1 is traveling forward or backward.

Meanwhile, if the accelerator opening degree at the time of the start of the shifting operation is greater than or equal to the first specified value "a" in step ST2, step ST2 produces a negative result ("No"), and the process proceeds to step ST7 where the control unit 101 determines whether or not the accelerator opening degree is greater than or equal to a predetermined value "c" (e.g., about 30%), which is an indication of the accelerator pedal having been depressed. If this determination in step ST7 produces a negative result ("No"), the control routine is ended (END). On the other hand, if the determination produces a positive result ("Yes"), the process proceeds to step ST8.

In step ST8, the control unit 101 determines similarly to step ST3 whether or not the shifting operation is completed. If the shifting operation is not completed, step ST8 produces a negative result ("No"), and the process returns to step ST7 where the control unit 101 again determines whether or not the accelerator opening degree is greater than or equal to the predetermined value "c". In other words, steps ST7 and ST8 determine whether or not the driver has continuously performed an accelerator depressing operation from the start to completion of the shifting operation.

If step ST8 produces a positive result ("Yes"), it indicates that the driver has continuously performed an accelerator depressing operation from the start to completion of the shifting operation. The control unit 101 therefore determines that the driver has simultaneously performed the shifting operation and the accelerator depressing operation, and the process proceeds to step ST6 where the control unit 101 controls the storage unit 103 to store therein a data set. On the other hand, if step ST7 produces a negative result ("No") before the shifting operation is completed, the control routine is ended (END).

As described so far, the EDR 100 in accordance with the present embodiment is capable of, if the automobile 1 to which the EDR 100 is mounted is subjected to an impact, for example in an accident, recording predetermined information useful for later analysis of the situation in which the accident occurred. In addition, if the automobile 1 has moved in a direction opposite to the driver's intended direction due to the driver's misunderstanding or mistake in a shifting operation, for example, when the driver accelerates the automobile 1 from standstill, the EDR 100 enables storing of information on the operation and information on the traveling state that results from the operation.

When the driver depresses the accelerator pedal too soon after a shifting operation or when the driver simultaneously depresses the accelerator pedal and shifts the shift lever, for example, to accelerate the automobile 1 from standstill, the driver is likely in such a hurry that the driver is misunderstanding the situation or making a mistake in the shifting operation. When this is actually the case, the automobile 1 moves in a direction opposite to the driver's intended direction. In response, the driver will likely immediately release the accelerator pedal and quickly activate the brake before performing another shifting operation. Alternatively, the driver may perform a new shifting operation after the automobile 1 comes to a halt as a result of colliding with something.

The EDR 100 in accordance with the present embodiment is capable of determining events that are not directly related to accidents like those above as events that are worth recording ("recording-worthy events") and of recording information on the driver's operational mistakes and the traveling state of the automobile 1 that results from the operational mistakes. By analyzing the data recorded in this manner, it becomes possible to identify situations where the driver will likely have a misunderstanding or make a mistake in shifting operations and to pin down the causes of the misunderstandings and mistakes.

Furthermore, as described earlier, only either if the driver has performed an accelerator depressing operation immediately after a shifting operation or if the driver has simultaneously performed these two operations, the EDR 100 in accordance with the present embodiment records information on related operations and traveling state. That would not add much to the size of stored data. In other words, the EDR 100 in accordance with the present embodiment is capable of limiting unnecessary increases in size of stored data without causing quality degradation by limiting events to be recorded.

### Other Embodiments

The embodiment and examples described above are for illustrative purposes only and by no means limit the configurations and applications of the present invention. For example, the embodiment above involved the configuration where the parking position "P", the reverse position "R", the neutral position "N", and the drive position "D" are specified as shift positions and the shift position sensor 71 outputs ON signals that correspond respectively to the parking position "P", the reverse position "R", and the neutral position "N". The present invention is by no means limited to this configuration.

As an alternative example, the shift position sensor 71 may also output an ON signal when the shift lever is at the drive position "D". In addition, there may be another forward mode position, such as a sport driving position "S", as well as the drive position "D", in which case, the EDR 100 may determine, as a recording-worthy event, an event in which the driver has performed an accelerator depressing operation within a predetermined period after the driver shifting the shift lever to the sport driving position "S" and an event in which the driver has simultaneously performed a shifting operation to the sport driving position "S" and an accelerator depressing operation.

The EDR 100 may further determine, as a recording-worthy event, an event in which the driver has performed an accelerator depressing operation within a predetermined period after the driver shifting the shift lever not only to the drive position "D" or the reverse position "R", but also to the parking position "P" or the neutral position "N" and an event in which the driver has simultaneously performed a shifting operation to the parking position "P" or the neutral position "N" and an accelerator depressing operation.

The embodiment above did not directly consider the vehicle speed of the automobile 1 in determining an event. Alternatively, the EDR 100 may determine an event as a recording-worthy event only if, for example, the vehicle speed is approximately zero (i.e., the automobile 1 is practically stationary) or less than or equal to a predetermined, very low value (e.g., 10 to 20 km/h).

As an example, a step may be provided before step ST1 in the control routine described above in reference to Figure 5. In that step, the control unit 101 determines whether or not the vehicle speed is less than or equal to a predetermined value. If the step produces a positive result ("Yes"), the process proceeds to step ST1. On the other hand, if the step produces a negative result ("No"), the control routine is ended (END). The provision of the step limits recording-worthy events more appropriately by positively excluding those cases where the driver is deliberately performing quick operations, for example, in sport driving.

In the embodiment above, the specified time Δt with which it is determined that an accelerator depressing operation has been performed too soon after a shifting operation and the specified values "a" and "b" and the predetermined value "c" with which it is determined that an accelerator depressing operation has been performed may be varied depending on vehicle speed. Specifically, for higher vehicle speed, the specified time Δt may be reduced or the specified value "b" and the predetermined value "c" for an accelerator depressing operation may be increased on an assumption that the driver would more likely deliberately perform quick operations.

In the embodiment above, the EDR 100 was mounted to the automobile 1 as an example. The present invention is by no means limited to this configuration and may be applicable to EDRs mounted to, for example, motorcycles, industrial vehicles, agricultural vehicles, and trains.

### Industrial Applicability

The vehicle information storage device in accordance with the present invention is useful when mounted to an automobile, especially, a passenger car because the vehicle information storage device can be used to identify situations where the driver will likely have a misunderstanding or make a mistake in shifting operations and to pin down the causes of the misunderstandings and mistakes.

### Reference Signs List

- 1: Automobile (Vehicle)
- 3: Automatic Transmission
- 100: Event Data Recorder (Vehicle Information Storage Device)
- 101: Control Unit
- 102: Temporary Storage Unit
- 103: Storage Unit
- a: First Specified Value for Accelerator Opening Degree (Accelerator Operation Amount)
- b: Second Specified Value for Accelerator Opening Degree (Accelerator Operation Amount)
- c: Predetermined Value for Accelerator Opening Degree (Accelerator Operation Amount)
- Δt: Specified Time (Predetermined Period)

## Claims

1. A vehicle state storage device mounted to a vehicle to store information on a predetermined vehicle state, said vehicle state storage device comprising a control unit that, either if a driver of the vehicle has performed an accelerator depressing operation within a predetermined period after the driver performing a shifting operation or if the driver has simultaneously performed a shifting operation and an accelerator depressing operation, controls a storage unit to store therein at least operating information on the shifting operation and the accelerator depressing operation and traveling state information on a traveling state of the vehicle.

2. The vehicle state storage device as set forth in claim 1, wherein:
the vehicle is provided with an automatic transmission that operates at least in forward mode and reverse mode;
the shifting operation is a switching operation to either the forward mode or the reverse mode; and
the control unit controls the storage unit to store therein at least traveling state information representative of whether the vehicle is traveling forward or backward.

3. The vehicle state storage device as set forth in either claim 1 or 2, wherein the control unit controls the storage unit to also store therein operating information on a braking operation by the driver.

4. The vehicle state storage device as set forth in any one of claims 1 to 3, wherein the control unit controls the storage unit to store therein the operating information and the traveling state information only when the vehicle is traveling at a speed less than or equal to a predetermined value.

5. The vehicle state storage device as set forth in any one of claims 1 to 4, wherein the control unit determines that the driver has performed the accelerator depressing operation within a predetermined period after the driver performing the shifting operation if the driver is depressing an accelerator operation amount less than a first specified value at a time when the shifting operation is started, and the accelerator operation amount has increased up to, or greater than, a second specified value within a specified time from a time when the shifting operation is completed, the second specified value being greater than the first specified value.

6. The vehicle state storage device as set forth in any one of claims 1 to 5, wherein the control unit determines that the driver has simultaneously performed the shifting operation and the accelerator depressing operation if the driver has continuously depressed an accelerator operation amount greater than or equal to a predetermined value from a time when the shifting operation is started to a time when the shifting operation is completed.

7. The vehicle state storage device as set forth in any one of claims 1 to 6, further comprising a temporary storage unit that serially stores, and updates at predetermined intervals, the operating information and the traveling state information, wherein:
the storage unit includes a non-volatile storage device; and
the control unit, upon determining that either the driver has performed the accelerator depressing operation within a predetermined period after the driver performing the shifting operation or the driver has simultaneously performed the shifting operation and the accelerator depressing operation, reads out part of the operating information and the traveling state information that is generated within a predetermined time both before and after the determination from the temporary storage unit and controls the storage unit to store therein that part of the operating information and the traveling state information.
